Europäisches Patentamt

European Patent Office

Office européen des brevets

(11) Publication number: **0 191 135 B1**

# EUROPEAN PATENT SPECIFICATION

(45) Date of publication of patent specification: **17.04.91** (51) Int. Cl.⁵: **H04N 1/38**

(21) Application number: **85111211.0**

(22) Date of filing: **05.09.85**

(54) Method and apparatus for reproducing colour separation pictures by scanning.

(30) Priority: **09.02.85 JP 22792/85**
**09.02.85 JP 22793/85**
**09.02.85 JP 22795/85**

(43) Date of publication of application:
**20.08.86 Bulletin 86/34**

(45) Publication of the grant of the patent:
**17.04.91 Bulletin 91/16**

(84) Designated Contracting States:
**DE FR GB IT**

(56) References cited:
**FR-A- 2 462 072**
**FR-A- 2 489 960**
**GB-A- 1 111 832**
**US-A- 3 894 178**
**US-A- 4 471 386**

**PATENT ABSTACTS OF JAPAN, vol. 6, no.
221 (P-153)[1099], 5th November 1982; & JP-
A-57 124 351**

(73) Proprietor: **Dainippon Screen Mfg. Co., Ltd.
1-1, Tenjinkitamachi Teranouchi-Agaru
4-chome Horikawa-Dori
Kamikyo-ku Kyoto 602(JP)**

(72) Inventor: **Ishida, Akira
29, Harinoki-cho Nishigamo
Kita-ku Kyoto(JP)**
Inventor: **Yumen, Akira
29-6, Hachinotsuno Otawa
Yamashina-ku Kyoto(JP)**
Inventor: **Saito, Naotada
1-15, Yosumi-cho Nishino
Yamashina-ku Kyoto(JP)**

(74) Representative: **Haft, Berngruber, Czybulka
Postfach 14 02 46 Hans-Sachs-Strasse 5
W-8000 München 5(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a method and an apparatus for exposing and recording color separation pictures by photoelectrically scanning an original picture, and particularly to those for recording desired areas of the original color picture by trimming it.

Recent advances in the manufacturing processes for platemaking and layout sheets have involved utilizing a layout scanner which handles most of the process electronically. However, wide use is still made of conventional techniques such as the "manual composing process," in which the films that have been color separated from each original color picture are applied to a base sheet manually.

In order to facilitate the manual composing process, a method has been disclosed for separating a plurality of original color pictures collectively, the color separation being facilitated by applying the original color pictures themselves to the base sheet in accordance with a desired layout, whereupon they are photoelectrically scanned. See, for example, Japanese laid-open patent application no. 59-226343 (the corresponding foreign patent applications being US 616,389, GB 84 13578, DE P 34 20 482.2 and FR 84 08837).

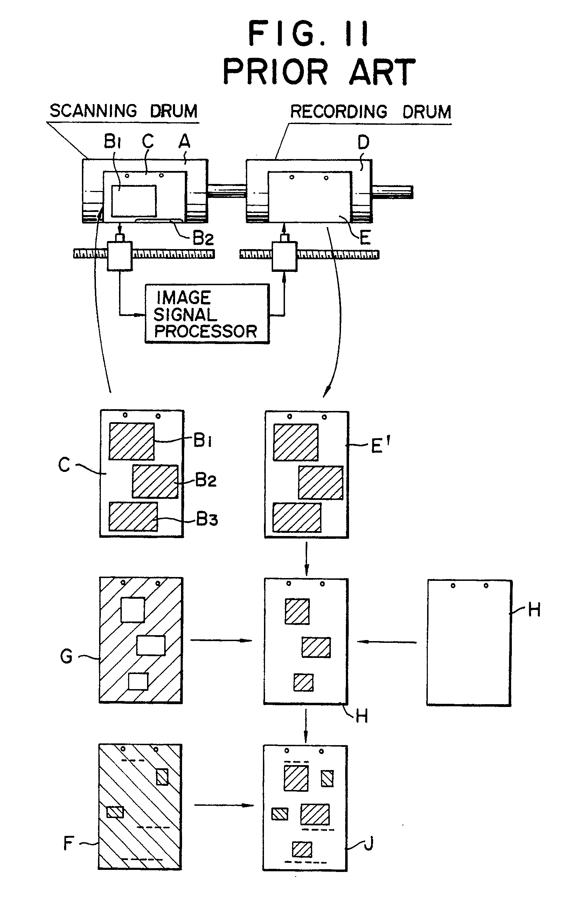

In the known apparatus (cf. Fig. 11 below), a base sheet (C) with a plurality of color pictures (B1, B2, B3) applied thereto according to a predetermined layout is loaded on a scanning drum (A) of the color scanner and photoelectrically scanned. The resulting reproductions of these original pictures are recorded on a photographic film (E) loaded on a recording drum (D), as color separated halftone pictures of equal size.

The plurality of color pictures (B1, B2, B3) used here are secondary originals reproduced from the original pictures on color duplication film or paper with a magnification indicated in the layout. In order to allow for simultaneous processing by the color scanner, a set of secondary originals pasted on the same base (C) (e.g. a transparent sheet of white paper provided with register marks) is arranged in such a way that characteristics such as gradation, density range, etc., will be equal.

In addition, if letters, line drawings or the like are to be composed with the color pictures, negative films (F) are made thereof. A trimming film (G) is specially manufactured in which the desired trimmed areas appear as window-like transparent portions and the rest is opaque. Base sheet (C) with the secondary originals pasted thereon is overlapped with trimming mask film (G) and negative film (F) with said letters, etc., and subjected to contact printing on a new film (H). One thus obtains a positive film (J) composed of the original color pictures and letters, etc., i.e. an original film for scanner processing.

This multiple contact printing work requires very accurate registering and, particularly if the pictures are in abutted arrangement, a plurality of mask films and even more accurate registering.

Another method is a scanning method whereby the secondary originals duplicated from the original pictures are cut to the desired trimming size and pasted on a transparent sheet. This sheet is then loaded with its surface on the scanning drum of a color scanner. However, in this method it is difficult to cut the secondary originals to the desired size, and when color separation is finished and there are any modifications in the trimming size, troublesome work is required to form the secondary originals again.

Japanese laid-open print no. 59-226343 filed by the Applicant discloses another scanning method in which a desired rectangular trimming mask is electronically superposed on an original picture, and exposed and recorded by scanning it together with letters or line patterns. However, this method limits the configuration of trimming to a rectangle.

It is an object of the present invention to record a color separation picture trimmed by a color scanner.

Another object of the present invention is to provide a method and an apparatus for recording the color separation picture trimmed to the desired configuration.

A further object of the invention is to provide, for layout recording work in which color separation pictures are composed with letters or pat terns, a method and an apparatus for performing the layout of a plurality of color separation pictures by one process, thereby reducing the necessary number of subsequent multiple contact prints to a minimum.

The fundamental principle of the present invention is as follows. Each original picture is pasted on a mask sheet in which the trimming areas corresponding to each original picture are transparent and the other areas are highly reflective, according to a desired layout. The mask sheet is set up on the scanning drum of a color scanner for photoelectric scanning, and a detected signal based on the difference in the scanning beam reflection level between the trimmed areas and the highly reflective areas is appropriately switched to exposingly record the desired color separation picture and/or a mask pattern.

In the first embodiment of the present invention, two kinds of photoelectric converting means are disposed in parallel for color separating the original color pictures and detecting the mask areas by the reflection level thereof and, through a detecting signal for the mask areas, the signals outputted from the two converting means are switched to control a scanning means on the recording side.

In the second embodiment, two kinds of photoelectric converting means are disposed on the same optical axis, perform pickup scanning twice separately, and reproduced pictures through each output are exposed and recorded on the same film.

In the third embodiment, two kinds of photoelectric converting means are disposed on the same optical axis, perform pickup scanning simultaneously and, through a signal by which the second converting means detects the mask areas, the signals from the two converting means are switched to control scanning means on the recording side.

Hereinafter, these embodiments and other examples will be described in detail with reference to the accompanying drawings.

Fig. 1 is a block diagram of a color scanner to which the first embodiment of the present invention is applied;

Fig. 2a is a view showing original pictures to be loaded on the scanning drum of a color scanner;

Fig. 2b is a view showing reproduced pictures;

Fig. 3 shows a sectional view along line III-III of one of the original pictures shown in Fig. 2a and waveshapes of photoelectric converting signals at the sectional part;

Figs. 4a, 4b and 4c are views each showing composed patterns produced by exposing doubly a color separated film according to the present invention and a line pattern film made by other means on a film;

Figs. 5, 6, 7 and 8 are block diagrams each showing a color scanner to which different embodiments of the present invention are applied;

Fig. 9 is a schematic construction of a photoelectric converting part in a pickup head in the apparatus shown in Fig. 8;

Fig. 10 shows, in analogy to Fig. 3, a sectional view of one of the original pictures cut along line X-X and waveshapes of photoelectric converting signals when scanning is carried out by the means shown in Fig. 8; and

Fig. 11 illustrates a conventional manner of recording an original picture after trimming, by composing letters or patterns if desired.

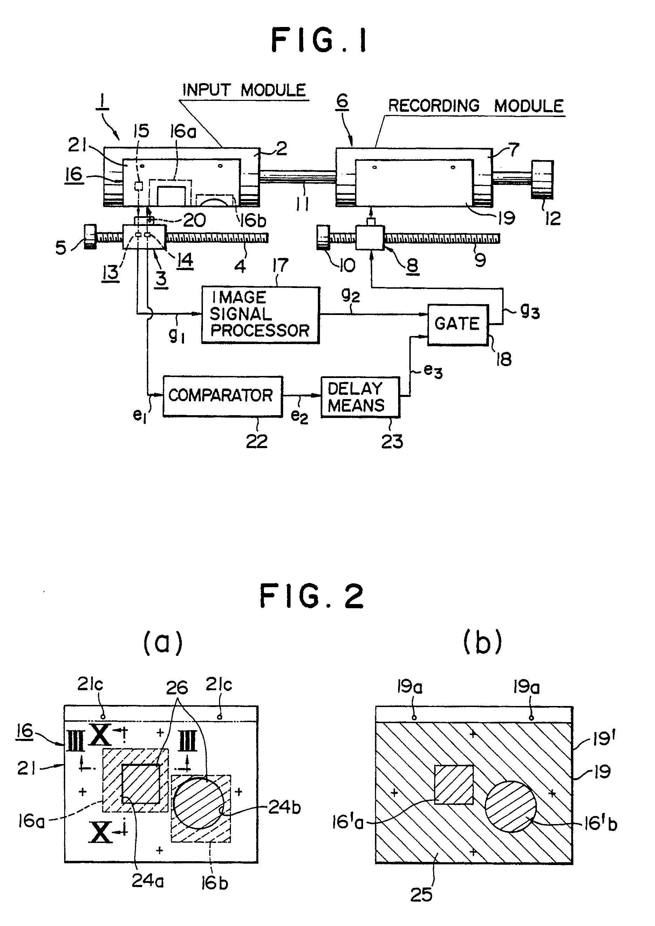

The first embodiment of the present invention will be described with reference to Fig. 1.

An input module 1 of a color scanner comprises a pickup drum 2, a pickup head 3, a feed screw 4 for pickup head 3 and a driving motor 5. A recording module 6 comprises a recording drum 7, a recording head 8 equipped with a halftone dot generating system, a feed screw 9 for the recording head and a driving motor 10.

Pickup drum 2 and recording drum 7 are rotated by a motor 12 which drives a common shaft 11, so that scanning is performed both at input module 1 and at recording module 6.

Pickup head 3 comprises, as in a usual color scanner, a photoelectric cell 13 and a second photoelectric cell 14 which is provided for performing the present invention, i.e. two sets of photoelectric converting means are provided.

First cell 13 scans, mainly by a light source 15, original pictures 16a and 16b pasted on a base sheet 16 which is loaded on pickup drum 2 and, as in a usual color scanner, outputs color separation signals (g1) comprising three color signals (r,g,b) (red, green, blue) and an unsharp signal (U) for enhancing the contour of the picture. Signals (g1) are then fed to a signal processing means 17 which carries out masking, color correction, gradation correction, etc., as in a usual color scanner.

An output (g2) of signal processing means 17 is fed to recording head 8 through a gate 18, and when the other input of this gate 18 is "low level", color separated pictures are exposed and recorded on a photosensitive film 19 which is loaded on recording drum 7.

Second cell 14 scans a base sheet 21 (a white peel-off film) having pasted thereon original pictures 16a and 16b illuminated by a light source 20 for the reflection pattern, and its output (e1) is converted into a high or low level binary signal (e2) by a comparator 22 and sent to a one bit buffer memory 23 for delaying.

First and second cells 13, 14 are spaced several millimeters apart in the sub-scanning direction (about ten or several tens of scanning lines), and a hood (not shown) is mounted in order to shield first cell 13 from light emitted from light source 20 and reflected by base sheet 16,. When pickup head 3 is moved along pickup drum 2 for scanning, second cell 14 scans base sheet 21 in advance of first cell 13.

Buffer memory 23 delays signal (e2) for a time interval as long as is necessary for pickup head 3 to be moved the distance between the two cells and for processing at signal processing means 17, and outputs signal (e3). The delay time of buffer memory 23 is selected so that the signals from the two cells which scanned the same point on base sheet 21 can be fed to gate 18 at the same time. The read out signal (e2) from buffer memory 23 is inputted to gate 18, sends gate 18 into an "ON-OFF" state and controls "pass or stop" of image signals (g2) outputted from signal processing means 17.

When signal (e3) is "H" (high level), output (g3) of gate 18 controls recording head 8 so that it can expose film 19 to the maximum intensity thereof. The maximum intensity is selected so that an exposed film area can become opaque after having undergone developing treatment.

When signal (e3) is "L" (low level), signal (e2) outputted from signal processing means 17 passes gate 18 without undergoing any modification. Thus, the color separation image signals are fed to recording head 8 and halftone pictures of dot areas are exposed and recorded according to the levels of signals (g2).

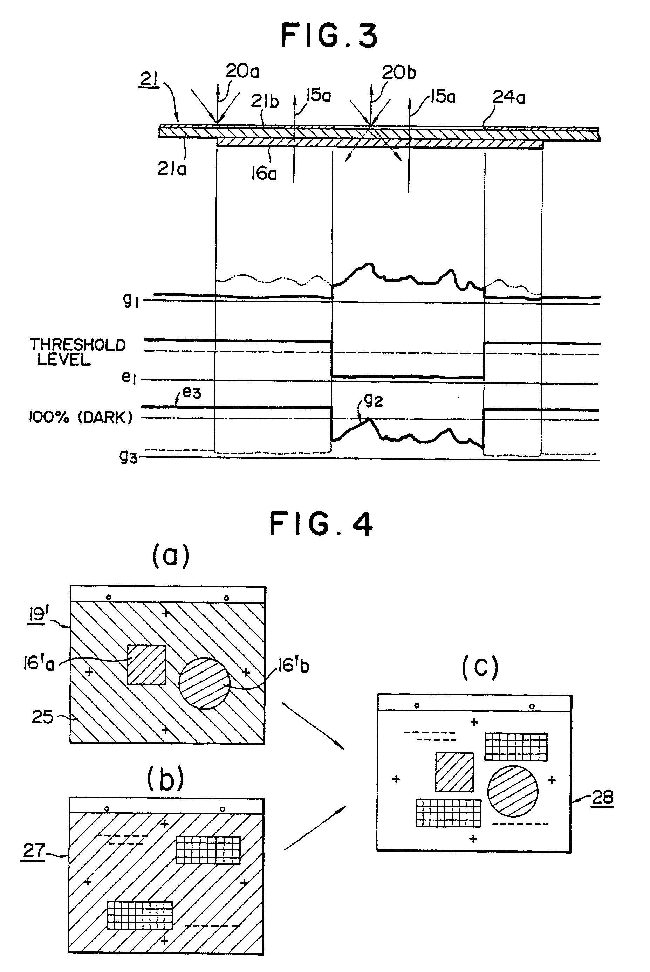

Fig. 2a shows base sheet 21 loaded on pickup drum 2 and two original color pictures 16a and 16b which are pasted on base sheet 21. Fig. 2b shows a picture obtained by developing photosensitive film 19 which is obtained by scanning and exposing what is shown in Fig. 2a by the appa ratus in Fig. 1. Base sheet 21 is constructed, as shown in Fig. 3, by laminating a transparent film base 21a and a white peel-off layer 21b having high surface reflectivity, and boring at least two pin holes 21c to be fitted with register pins disposed on pickup drum 2 to permit more exact positioning.

Photosensitive film 19 is substantially the same size as base sheet 21 and also has bored pin holes 19a. The register pins fitted into pin holes 21c or 19a are bored with pin diameters and pitches commonly applied to work for scanning drum 2, recording drum 7, CAD (computer-aided design, which will be described hereinafter), a contact printer or supporting jigs. The pin and punch hole system for the above-described "positioning" is a customary technique, so that no detailed description is required.

Base sheet 21 is provided, according to a layout designated by a "composing design," with two transparent trimming windows 24a and 24b which are made by removing white peel-off layer 21b in areas to be reproduced from original pictures 16a and 16b. The cutting work for trimming windows 24a and 24b has no relation with the gist of the present invention so that no detailed description is required. However, if it is necessary to configure the shape or size of trimming areas with high accuracy, it is preferable to cut off the trimming windows in exact positioning using a "pattern processing technique," such as the CAD system.

As original pictures 16a and 16b, it is desirable to use secondary original pictures reproduced on a duplicate film at a desired magnification or reduction, with equivalent tone and gradation characteristics.

When original pictures 16a and 16b are pasted on transparent layer 21a of base sheet 21, as shown in Fig. 3, the base sides of the original films are contacted, and if the desired areas of original pictures 16a and 16b are aligned with respective transparent windows 24a and 24b provided on base sheet 21, they are pasted on said windows 24a and 24b. This work is the same as in usual "composing layout work."

The lower part of Fig. 3 shows graphs of color separated image signal (g1) from first cell 13 (only one of the three channels R, G and B being shown), signal (e1) from second cell 14 and signals (g2, g3 and e3) based on g1 and e1. First cell 13 receives an illuminating light 15a from light source 15, scans original picture 16a in window area 24a removed from layer 21a, and outputs the image signal. In areas other than window 21a in which white layer 21b remains, the intensity of any illuminating light passing through is detected in attenuation, as shown in Fig. 3 as signal (g1).

Second cell 14 detects light from light source 20 which is reflected on the surface of white layer 21b still remaining in the area of window 24a. The reflected light is shown in Fig. 3 as signal (e1) in the area where layer 21b exists, the reflected light is "H" (high level). In the area of window 24a, it passes through to the opposite side or is absorbed into original picture 16a to become low level. The high or low level of output (e1) of second cell 14 is compared with a certain reference level by a comparator 22 and converted into an "ON-OFF" binary signal. Comparator 22 inputs the high level detection signal to gate 18 through buffer 23, signaling an area in which remaining layer 21b is scanned, and controls gate 18.

In the reproduced picture shown in Fig. 2b, an area 25 on the original picture side corresponding to the area in which layer 21b remains is exposed to a light intensity at least capable of recording halftone dots with a 100% area ratio (the (e3) level shown in Fig. 3) and, when an image on film 19 is contact printed on other photosensitive material, area 25 is sufficiently blackened so that it may serve as a mask for shielding printing light.

In trimming areas 24a and 24b, signal (g2) from signal processing means 17 passes through gate 18, and color separated pictures are recorded as halftone pictures 16a' and 16b'.

An exposed and developed color separated image film 19' has areas 16a' and 16b', and halftone pictures are produced in areas 16a' and 16b' with sufficiently blackened areas surrounding them, the "cut mask" (or "knockout mask") used conventionally for subsequent contact printing can be dispensed with.

In Fig. 1 first cell 13 and second cell 14 are disposed in mutual alignment in the sub-scanning direction (i.e. the axial direction of pickup drum 2), but they may also be disposed in the main scanning direction (i.e. the circumferential direction of pickup drum 2). In the latter case the maximum capacity of buffer memory 23 suffices for one portion per scanning line.

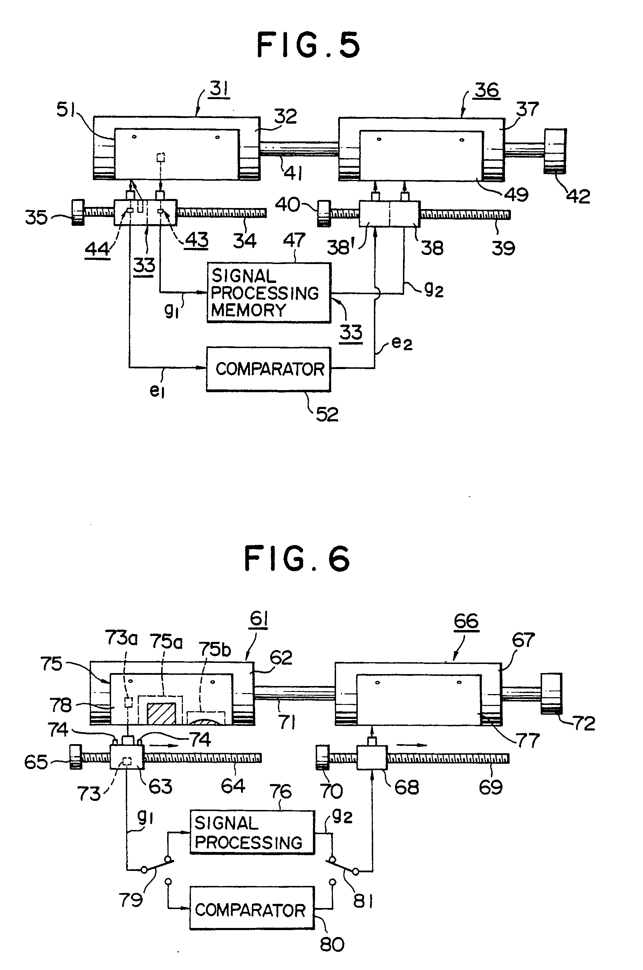

Fig. 5 is a block diagram showing another embodiment of the present invention.

This embodiment has an input module 31 comprising a scanning drum 32, a pickup head 33, a feed screw 34 and a motor 35, etc., a recording module 36 comprising a recording drum 37, recording heads 38, 38', a feed screw 39, a motor 40, etc., a shaft 41 and a motor 42, etc., which are virtually the same as described above for Fig. 1, but differ in the construction of the two sets of heads. A first pickup head 43 and a second pickup head 44 are spaced a certain distance apart in input module 31, while first recording head 38 and second recording head 38' are spaced the same distance apart in recording module 36. First pickup head 43 and first recording head 38 are the same as used in a usual color scanner. Head 43 photoelectrically scans original pictures 51 loaded on scanning drum 32 and outputs primary color separated image signals (g1). Signals (g1) are converted into recording signals (g2) by a signal processing means 47 and sent to head 38 to record color separated images on a photosensitive material 49 which is loaded in recording drum 37.

Like second cell 14 shown in Fig. 1, second pickup head 44 scans a highly reflective mask of a desired shape which is overlaid on the original picture, and outputs high level mask signal (e1) for a masked area and low level signal (e1) for an unmasked area. Signal (e1) is converted into ON-OFF binary signal (e2) by a comparator 52 and inputted to second recording head 38'.

Second recording head 38' assumes either an exposing or a nonexposing output state depending on signal (e2), so that patterns corresponding to the configuration of the highly reflective mask are recorded on photosensitive material 49. The light intensity when head 38' is in the exposing state may, as in the means shown in Fig. 1, be such that an exposed area of material 49 is sufficiently blackened after being developed to present a "mask effect" during subsequent contact printing.

The two heads in input module 31 and recording module 35 may be in reversed arrangement compared to that shown in Fig. 5. That is, the sequence of the pickup and recording of the color pictures and the mask is irrelevant. However, the distance between the two heads in modules 31 and 36 must exactly coincide to prevent the position of the mask in reproduced images from slipping.

Second recording head 38' in the embodiment in Fig. 5 uses a micro type semiconductor laser as a light source, and the mask pattern can be exposed by ON-OFF controlling.

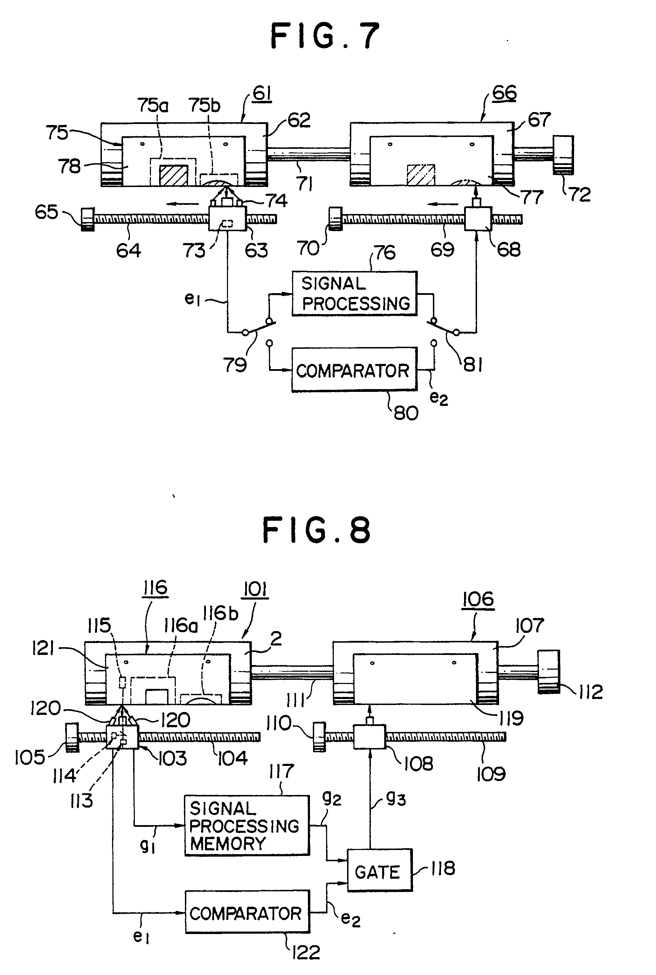

Figs. 6 and 7 show the third embodiment, Fig. 6 showing the recording of the color separated images of the original patterns, and Fig. 7 the recording of the mask. Like the previous two embodiments, this embodiment comprises an input module 61 having a scanning drum 62, a pickup head 63, a feed screw 64, a motor 65, etc., a recording module 66 having a recording drum 67, a recording head 68, a feed screw 69, a motor 70, etc., a common shaft 71 and a motor 72.

Pickup head 63 comprises a lamp for a transparent original 73a disposed on the inside of scanning drum 62, a lamp for a reflection sheet 74 disposed on the outside of drum 62 and a photoelectric cell 73. Light radiated by the lamp passes through an original color picture 75a or 75b loaded on drum 62 together with the mask having a highly reflective surface and transparent windows formed thereon, and reaches a photocell 73 of head 63. As in a usual color scanner, this photocell outputs primary color separated image signals (g1). These signals (g1) are fed to a signal processing means 76 through a changeover switch 79.

Signal processing means 76 outputs recording color separated image signals (g2), which are fed to recording head 68 through another changeover switch 81, so that reproduced pictures are recorded on photosensitive material 77 loaded on recording drum 67.

After the color separation recording is finished as shown in Fig. 7, the lamp of pickup head 63 is switched towards reflective lamp 74, and heads 63 and 68 are moved in the opposite direction to that shown in Fig. 6 to scan the mask area. This mask area may also be scanned prior to the color separation recording of the original color pictures.

As in the above embodiments, output (e1) of cell 73 of pickup head 63 is high level when scanning the mask area where a highly reflective layer of a sheet 78 remains, while it is high level at the window area from which the layer is removed, i.e. at the transparent area. This signal (e1) is fed to a comparator 80 through changeover switch 79, and converted into binary signal (e2). Signal (e2) is then fed to recording head 68 to record masks of the desired shape.

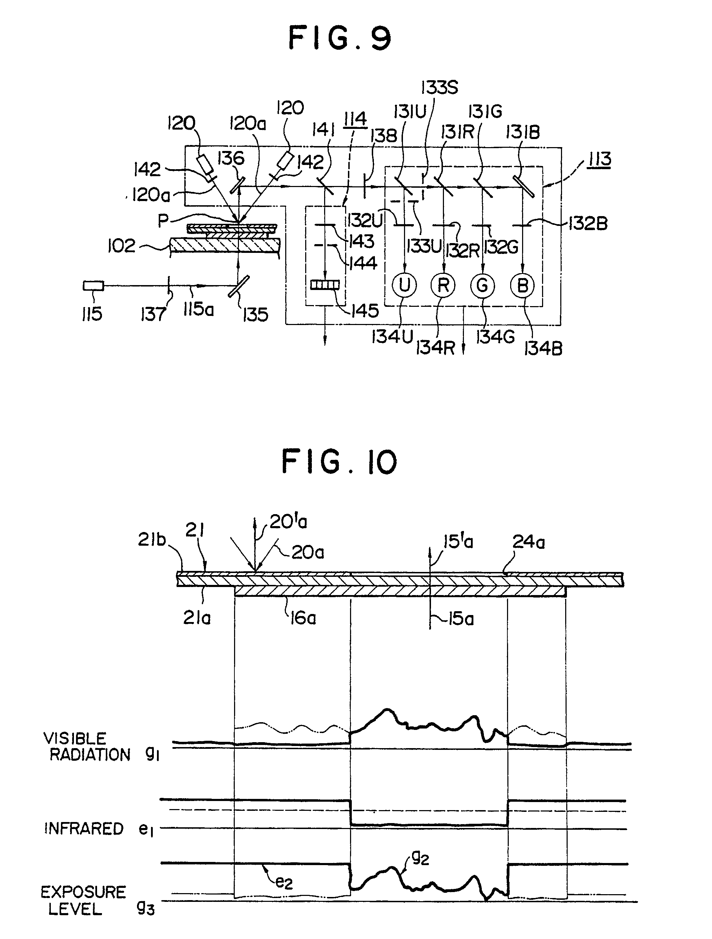

Fig. 8 is a block diagram of the fourth embodiment of the present invention, while Fig. 9 shows a construction of a pickup head of this embodiment. This embodiment comprises an input module 101 having a scanning drum 102, a pickup head 103, a feed screw 104, a motor, etc., and a recording module 106 having a recording drum 107, a recording head 108, a feed screw 109, a motor 110, etc. Scanning drum 102 and recording drum 107 are rotated by a motor 112 through a common shaft 111. Two photoelectric cells 113 and 114 are mounted on scanning head 103. First cell 113 scans original color pictures 116a and 116b by a light flux radiated from a lamp 115 for color transparency, outputs primary color separated image signals (g1) and feeds the signals to a signal processing means 117. Signals (g2) converted by signal processing means 117 are fed to recording head 108 through a gate 118 to record reproduced color separation pictures on photosensitive material 109 loaded on recording drum 107. Second cell 114 scans the highly reflective surface of a sheet 121 by a reflection lamp which scans and records the mask area, and its output signal (e1) is converted into an "H" or "L" binary signal (e2) by a comparator 122, as in the above embodiments, and then fed to gate 118 to cause signals (g2) to pass through or be interrupted. When binary signal (e2) is high level, a signal (g3) is outputted from gate 118 to recording head 108, and head 108 emits a light quantity sufficient for completely blackening photosensitive material 119.

When binary signal (e2) is low level, signal (g2) passes through gate 118 and a reproduced color separation picture is recorded on photosensitive material 119. Fig. 9 shows specific constructions of first and second cells 113 and 114 shown in Fig. 8.

First cell 113 has a construction as in the above embodiments, i.e. as in known photoelectric color separation means. A light flux obtained from a transparency lamp 115 illuminating original color picture 121 loaded on scanning drum 102 is received by a mirror 136. The construction comprises half mirrors 131U, 131R, 131G and a mirror 131B which branch off one unsharp signal channel and three color channels, a large diameter aperture 133U bored in the unsharp signal channel and a smaller diameter aperture 133S bored in the color channel, color filters 132U, 132R, 132G and 132B mounted on the respective channels, and photocells 134U, 134R, 134G and 134B which photoelectrically convert unsharp signal (U) and three kinds of color separation signals (R, G and B) when receiving a light flux that has passed through these filters.

In the optical passage immediately behind lamp 115 and immediately before cell 113, there is an infrared cutting filters 137 and 138 in each case. Reflection lamp 120 disposed at the outside of scanning drum 102 emits infrared light to a scanning point P, and a reflected light flux from scanning point P is reflected by mirror 136 and half mirror 141 to reach second cell 114. Immediately behind lamp 120 there are visual light cutting filters 142 which pass infrared rays but cut out visual light rays. A visual light cutting filter 143 is also disposed before second cell 114. Half mirror 141 is preferably a mirror which passes visual light rays and reflects infrared rays.

In second cell 114 the infrared ray passing through visual light ray cutting filter 143 hits a photocell 145 through an aperture 144. The diameter of aperture 144 is the same as that of smaller aperture 133S for a color channel of first cell 113.

In the above constructions, first cell 113 and second cell 114 can perform photoelectric scanning by treating transmitted light and reflected light at the same scanning point independently of each other, without any effect on measured light values by infrared cutting filters 137, 138 and visual light cutting filters 142, 143.

Fig. 10 shows waveshapes of color separation signal (g1) (with only one of R, G and B channels shown) from first cell 113 when the cell scans original picture 16 along line X - X of Fig. 2a by the means shown in Figs. 8 and 9. It also shows waveshapes of mask recording signal (e1) from second cell 114. Signals (g1, g2, g3, e1 and e2) were explained above in connection with Fig. 3.

When recording head 118 provided with a dot generator is employed, using photocell 145 in second cell 114 as a line sensor as described in Japanese patent application no. 58-100236, published as no. 59-226343 (see the introduction to the present specification), the contour of trimming can be smoothed.

In the above embodiments, color transparency is used as original picture 16a or 16b, but the present invention can also be applied to a reflection mode. If white paper with a surface reflection coefficient higher than a reflection copy with the maximum reflection coefficient among the reflection copies (i.e. the highlight point In a positive picture) is used as a base sheet, the comparator can discriminate between different reflection coefficients in the reflection copy and the base sheet, so that the present invention can be applied.

Heretofore, the "negative case" has been described, i.e. a reproduced color separation picture is negative and the trimming mask area blackened, but the present invention may also be applied in a "positive mode". In terms of Fig. 1, when the mask area of original picture 16 (i.e. the white area) is detected, recording head 8 is controlled so that a halftone pattern with an area ratio of 0% can be recorded, and when trimming window 24a or 24b is detected, recording head 8 is controlled so that the color separated image signals reversed to positive can be fed to it. In addition, it is possible to record halftone patterns of any area ratio on the mask area. The mask area of the original picture may be white paper instead of the above-described white peel-off film.

## Claims

1. A method for reproducing color pictures by trimming desired areas of an original picture using an electronic color scanner, characterized by the steps of:

covering areas except for said desired areas of said original color picture with a mask sheet having a highly reflective surface;

scanning photoelectrically said mask sheet and said original color picture at separate scanning points using first and second photoelectric converting means with first and second light sources, respectively;

having said photoelectric converting means scan said original color picture and output a signal for recording a reproduced color separation picture;

having said second photoelectric converting means scan said mask sheet and output a signal for discriminating the mask sheet areas from the others; and

controlling a scanning means on the recording side in accordance with said discriminating signal so that a photosensitive material can be exposed to a certain light intensity in said mask areas, and exposed to said color separation picture in the other areas.

2. The method of claim 1, characterized in that said first and second photoelectric converting means are attached to said scanning means at a certain distance apart, and each converting means outputs respective signals with a time delay when each scans the identified point of the original color picture.

3. The method of claim 2, characterized in that a first and a second scanning means on the recording side are spaced the same distance apart as said first and said second photoelectric converting means, and each is controlled by a signal outputted from each of the corresponding converting means.

4. The method of claim 2, characterized in that the earlier of the signals outputted from said first and second photoelectric converting means is delayed by a time equivalent to said time difference, so that said two signals can coincide to control said scanning means on the recording side.

5. The method of claim 1, characterized in that said first and second photoelectric converting means are provided for the same pickup scanning means, each of said converting means is switched to pick up said original picture once, and on each occasion the same scanning means on the recording side is controlled so that it can scan and expose the same photosensitive material.

6. The method of claim 1, characterized in that said first and second photoelectric converting means are provided for the same pickup scanning means and simultaneously scan the same point on the original picture to control one of the scanning means on the recording side.

7. The method of claim 4 or 6, characterized in that areas where the mask sheet exists are discriminated by an output signal level of said photoelectric converting means, and in these areas said scanning means on the recording side is oontrolled so as to expose said photosensitive material to a certain light intensity, and in the other areas where no mask sheet exists said scanning means on the recording side is controlled so as to record the reproduced color separation picture from said first converting means.

8. The method of claim 7, characterized in that the means for discriminating the areas where said mask sheet exists is a level comparator.

9. The method of any of the above claims, characterized in that said mask sheet is a film having a white peel-off layer.

10. An apparatus for recording color separated pictures of original pictures and trimming mask patterns, characterized in that it comprises:

a trimming mask sheet which covers said original color picture and areas remaining after elimination of the other areas to be reproduced by trimming, said remaining areas being made of a material having a high reflection coefficient such as a white color, etc.;

a first photoelectric converting means for outputting a color separated picture signal by photoelectrically scanning said first original picture;

a second photoelectric converting means for outputting binary signals of different levels in areas of said trimming mask sheet having a high reflection coefficient and in the other areas by photoelectrically scanning said original picture;

and a scanning means on the recording side which scans and records color separated pictures by scanning and exposing a photosensitive material in said trimming mask areas having a high reflection coefficient to a light intensity of a certain level in accordance with said binary signals from said second converting means, and in the other areas in accordance with said signal from said first converting means.

11. The apparatus of claim 10, characterized in that said first and second photoelectric converting means scan said original picture in pickup fashion at a certain distance therefrom, and said scanning means on the recording side comprises first and second exposing and scanning means which scan and expose said photosensitive material with a certain distance therebetween and are controlled by the signals coming from the corresponding converting means.

12. The apparatus of claim 10, characterized in that said first and second photoelectric converting means scan said original picture in pickup fashion at a certain distance therefrom, and delay the signal from the preceding means for a desired time to allow said two signals to coincide to control the single scanning means on the recording side.

13. The apparatus of claim 10, characterized in that said first and second photoelectric converting means pick up the same point at the same time, and said single scanning means on the recording side is controlled by switching signals outputted from said converting means.

14. The apparatus of claim 12 or 13, characterized in that said areas of the mask sheet having a high reflection coefficient are discriminated from the others by the level of the binary signals from said second converting means, the photosensitive material is exposed to a certain light intensity in the highly reflective areas, and the reproduced color separated picture is exposed on the photosensitive material according to said first converting means in the other areas.

## Revendications

1. Procédé de reproduction d'images en couleur par extraction de zones désirées d'une image initiale utilisant un analyseur couleur électronique, caractérisé par les étapes suivantes :

   couvrir des zones sauf lesdites zones désirées de l'image couleur initiale par une feuille de masque ayant une surface fortement réflectrice ;

   analyser photoélectriquement la feuille de masque et l'image couleur initiale en des points d'analyse séparés en utilisant des premier et second moyens de conversion photoélectrique avec des première et seconde sources lumineuses, respectivement ;

   analyser par lesdits moyens de conversion photoélectrique l'image couleur initiale et fournir un signal pour enregistrer une image de séparation de couleur reproduite ;

   analyser par lesdits moyens de conversion photoélectrique la feuille de masque et fournir un signal pour effectuer une discrimination entre les zones de la feuille de masque et les autres ; et

commander un moyen de balayage du côté enregistrement en accord avec le signal de discrimination de sorte qu'un matériau photosensible peut être exposé à une certaine intensité lumineuse dans les zones de masque et exposé à l'image de séparation de couleurs dans les autres zones.

2. Procédé selon la revendication 1, caractérisé en ce que les premier et second moyens de conversion photoélectrique sont fixés aux moyens d'analyse à une certaine distance l'un de l'autre, et en ce que chaque moyen de conversion fournit des signaux respectifs avec un retard quand chacun analyse le point identifié de l'image couleur initiale.

3. Procédé selon la revendication 2, caractérisé en ce qu'un premier et un second moyen de balayage du côté enregistrement sont espacés de la même distance que les premier et second moyens de conversion photoélectrique et en ce que chacun est commandé par un signal fourni à partir de chacun des moyens de conversion correspondants.

4. Procédé selon la revendication 2, caractérisé en ce que le premier des signaux fourni à partir des premier et second moyens de conversion photoélectrique est retardé d'une durée équivalente audit retard, de sorte que les deux signaux peuvent coïncider pour commander les moyens de balayage du côté enregistrement.

5. Procédé selon la revendication 1, caractérisé en ce que les premier et second moyens de conversion photoélectrique sont munis des mêmes moyens d'analyse de détection, chacun des moyens de conversion est commuté pour détecter l'image originale une fois et, dans chaque cas, le même moyen de balayage du côté enregistrement est commandé de sorte qu'il puisse balayer et exposer le même matériau photosensible.

6. Procédé selon la revendication 1, caractérisé en ce que les premier et second moyens de conversion photoélectrique sont munis du même moyen d'analyse de détection et analysent simultanément le même point de l'image originale pour commander l'un des moyens de balayage du côté enregistrement.

7. Procédé selon la revendication 4 ou 6, caractérisé en ce que les zones où la feuille de masque existe sont différenciées par un niveau de signal de sortie des moyens de conversion photoélectrique, et en ce que, dans ces zones, les moyens de balayage du côté enregistrement sont commandés de façon à exposer le matériau photosensible à une certaine intensité lumineuse, et, dans les autres zones où aucune feuille de masque n'existe, les moyens de balayage du côté enregistrement sont commandés de façon à enregistrer l'image de séparation de couleur reproduite à partir des premiers moyens de conversion.

8. Procédé selon la revendication 7, caractérisé en ce que le moyen de différenciation des zones où la feuille de masque existe est un comparateur de niveau.

9. Procédé selon l'une quelconque des revendications précédentes caractérisé en ce que la feuille de masque est une feuille comprenant une couche blanche décollable.

10. Appareil d'enregistrement d'images séparées en couleurs d'images originales et de motifs de masque d'extraction, caractérisé en ce qu'il comprend:
une feuille de masque d'extraction qui couvre l'image couler originale et des zones restant apres l'élimination des autres zones à reproduire par extraction, les zones restantes étant faites d'un matériau ayant un coefficient de réflexion élevé, par exemple de couleur blanche, etc;
un premier moyen de conversion photoélectrique pour fournir un signal d'image séparé en couleur en analysant photoélectriquement la première image originale;
un second moyen de conversion photoélectrique pour fournir des signaux binaires de niveaux différents dans des zones de la feuille de masque d'extraction ayant un coefficient de réflexion élevé et dans les autres zones en analysant photoélectriquement l'image originale; et
un moyen de balayage du côté enregistrement qui balaye et enregistre des images séparées en couleur en balayant et et enregistre des images séparées en couleur en balayant et exposant un matériau photosensible dans les zones de masque d'extraction ayant un coefficient de réflexion élevé à une intensité lumineuse d'un certain niveau en fonction de signaux binaires en provenance du second de conversion, et dans les autres zones en fonction du signal en provenance du premier moyen de conversion.

11. appareil selon la revendication 10, caractérisé en ce que les premier et second moyens de conversion photoélectrique analysent l'image originale par détection avec une certaine distance entre eux, et les moyens de balayage du côté, enregistrement comprennent des premier et second moyens d'exposition et de balayage qui balayent et exposent ledit matériau photosensible, une certaine distance étant prévue entre eux, et qui sont commandés par les signaux provenant du moyen de conversion correspondant

12. Appareil selon la revendication 10, caractérisé en ce que les premier et second moyens de conversion photoélectrique analysent l'image originale par détection avec une certaine distance entre eux, et retardent le signal en provenance du moyen précédent durée déterminée pour permettre aux deux signaux de coïncider pour commander le moyen de balayage spécifique du côté enregistrement.

13. Appareil selon la revendication 10, caractérisé en ce que les premier et second moyens de conversion photoélectrique détectent le même point en même temps et le moyen de balayage spécifique du côté enregistrement est commandé par des signaux de commutation fournis á partir des moyens de conversion.

14. Appareil selon la revendication 12 ou 13, caractérisé en ce que les zones de la feuille de masque ayant un coefficient de réflexion élevé sont différenciées les unes des autres par le niveau de signaux binaires en provenance du second moyen de conversion, le matériau photosensible est exposé à une certaine intensité lumineuse dans les zones fortement réflectrices, et l'image séparée en couleur reproduite est exposée sur le matériau photosensible en fonction du premier moyen de conversion dans les autres zones.

**Ansprüche**

1. Verfahren zum Reproduzieren von Farbbildern durch Trimmen erwünschter Bereiche auf einem Originalfarbbild mit Hilfe eines elektronischen Farbabtasters, gekennzeichnet durch folgende Schritte:
es werden Bereiche des Originalfarbbildes mit Ausnahme der erwünschten Bereiche mit einer Maske abgedeckt, die eine hochreflektierende Oberfläche aufweist;

die Maske und das Originalfarbbild werden an unterschiedlichen Abtastpunkten fotoelektrisch unter Verwendung zweier fotoelektrischer Wandlervorrichtungen mit jeweils einer Lichtquelle abgetastet,

wobei die eine fotoelektrische Wandlervorrichtung das Originalfarbbild abtastet und ein Signal für die Wiedergabe eines reproduzierten Farbauszugsbildes ausgibt und

die zweite fotoelektrische Wandlervorrichtung die Maske abtastet und ein Signal zum Unterscheiden der Maskenbereiche von den übrigen Bereichen ausgibt;

es wird eine Abtastvorrichtung auf der Wiedergabeseite in Übereinstimmung mit dem Unterscheidungssignal so gesteuert, daß ein lichtempfindliches Material in den Maskenbereichen bis zu einer bestimmten Lichtintensität und in den anderen Bereichen zu dem Farbauszugsbild entwickelt wird.

2. Verfahren nach Anspruch 1, dadurch gekennzeichnet, daß die beiden fotoelektrischen Wandlervorrichtungen mit den Abtastvorrichtungen verbunden und gegenüber diesen in einer gewissen Entfernung angeordnet sind, und daß jede Wandlervorrichtung dann, wenn sie die identifizierten Punkte des Originalfarbbildes abtastet, entsprechende Signale mit einer Zeitverzögerung ausgibt.

3. Verfahren nach Anspruch 2, dadurch gekennzeichnet, daß zwei Abtastvorrichtungen auf der Wiedergabeseite in der gleichen Entfernung angeordnet sind wie die entsprechenden fotoelektrischen Wandlervorrichtungen, und daß jede Abtastvorrichtung durch ein Signal gesteuert wird, das von jeweils der korrespondierenden Wandlervorrichtung ausgegeben wurde.

4. Verfahren nach Anspruch 2, dadurch gekennzeichnet, daß von den Signalen, die von den beiden fotoelektrischen Abtastvorrichtungen ausgegeben werden, das jeweils früher ausgegebene Signal um eine Zeit verzögert wird, die äquivalent dem Zeitunterschied ist, so daß die beiden Signale zur Steuerung der Abtastvorrichtung auf der Wiedergabeseite zusammenfallen können.

5. Verfahren nach Anspruch 1, dadurch gekennzeichnet, daß die beiden fotoelektrischen Wandlervorrichtungen eine gemeinsame Aufnahme-Abtastvorrichtung aufweisen, wobei die beiden Wandlervorrichtungen geschaltet werden, um das Originalfarbbild abzutasten, und daß bei jeder Abtastung eine gemeinsame Abtastvorrichtung auf der Wiedergabeseite so gesteuert wird, daß sie das gleiche fotoempfindliche Material abtasten und entwickeln kann.

6. Verfahren nach Anspruch 1, dadurch gekennzeichnet, daß die beiden fotoelektrischen Wandlervorrichtungen eine gemeinsame Aufnahme-Abtastvorrichtung aufweisen und gleichzeitig den gleichen Punkt auf dem Originalfarbbild abtasten, um auf der Wiedergabeseite eine Abtastvorrichtung zu steuern.

7. Verfahren nach Anspruch 4 oder 6, dadurch gekennzeichnet, daß Bereiche, in denen die Maske vorliegt, durch einen Ausgangssignalpegel der fotoelektrischen Wandlervorrichtung unterschieden werden, daß in diesen Bereichen die Abtastvorrichtung auf der Wiedergabeseite so gesteuert wird, daß das fotoempfindliche Material bis zu einer bestimmten Lichtintensität entwickelt wird, und daß in den anderen Bereichen, wo keine Maske vorliegt, die Abtastvorrichtung auf der Wiedergabeseite so gesteuert wird, daß das reproduzierte Farbauszugssignal mit Hilfe der ersten Wandlervorrichtung wiedergegeben wird.

8. Verfahren nach Anspruch 7, dadurch gekennzeichnet, daß die Vorrichtung zum Diskriminieren derjenigen Bereiche, in denen die Maske vorliegt, ein Pegelkomparator ist.

9. Verfahren nach einem der vorhergehenden Ansprüche, dadurch gekennzeichnet, daß die Maske ein Film mit einer weißen Abziehschicht ist.

10. Vorrichtung zur Wiedergabe von Farbauszugsbildern von Originalfarbbildbereichen und Maskenbereichen gekennzeichnet durch folgende Merkmale:

eine Abdeckmaske, die das Originalfarbbild und die Restbereiche abdeckt, die durch Trimmen nach Eliminieren der übrigen zu reproduzierenden Bereiche verbleiben, wobei diese Restbereiche aus einem Material mit einem hohen Reflexionskoeffizient bestehen, so z.B. einem weißen Lack etc.;

eine erste fotoelektrische Wandlervorrichtung, die bei der fotoelektrischen Abtastung des Originalfarbbilds ein Farbauszugssignal ausgibt;

eine zweite fotoelektrische Wandlervorrichtung, die bei der fotoelektrischen Abtastung des Originalfarbbildes Binärsignale abgibt, die in Bereichen der Abdeckmaske mit einem hohen Reflexionskoeffizient und in den übrigen Bereichen unterschiedliche Pegel aufweisen;

eine Abtastvorrichtung auf der Wiedergabeseite, die durch Abtastung Farbauszugsbilder wiedergibt, indem ein fotoempfindliches Material abgetastet und entwickelt wird, wobei dieses in den Bereichen der Abdeckmaske mit einem hohen Reflexionskoeffizient bis zu einer bestimmten Lichtintensität in Übereinstimmung mit den binären Signalen der zweiten Wandlervorrichtung und in den anderen Bereichen in Übereinstimmung mit dem Signal der ersten Wandlervorrichtung erfolgt.

11. Vorrichtung nach Anspruch 10, dadurch gekennzeichnet, daß die beiden fotoelektrischen Wandlervorrichtungen das Originalfarbbild in einem bestimmten Abstand voneinander durch Abtasten aufnehmen, und daß die Abtastvorrichtung auf der Wiedergabeseite zwei Vorrichtungen umfaßt, die mit einem bestimmten Abstand voneinander das fotoempfindliche Material abtasten und entwickeln und die von den Signalen gesteuert werden, die von den entsprechenden Wandlervorrichtungen geliefert werden.

12. Vorrichtung nach Anspruch 10, dadurch gekennzeichnet, daß die beiden fotoelektrischen Wandlervorrichtungen das Originalfarbbild in einem gewissen Abstand voneinander aufnehmen und die jeweiligen Signale um eine bestimmte Zeit verzögern, damit die beiden Signale koinzidieren können und die einzige Abtastvorrichtung auf der Wiedergabeseite steuern.

13. Vorrichtung nach Anspruch 10, dadurch gekennzeichnet, daß die beiden fotoelektrischen Wandlervorrichtungen den gleichen Punkt zur gleichen Zeit abtasten, und daß eine einzige Abtastvorrichtung auf der Wiedergabeseite durch Umschalten der von der Wandlervorrichtung ausgegebenen Signale gesteuert wird.

14. Verfahren nach Anspruch 12 oder 13, dadurch gekennzeichnet, daß die Bereiche der Abdeckmaske mit einem hohen Reflexionskoeffizient von den übrigen Bereichen durch den Pegel der Binärsignale der zweiten Wandlervorrichtung unterschieden werden, wobei das fotoempfindliche Material bis zu einer gewissen Lichtintensität in den hochreflektierenden Bereichen und das reproduzierte Farbauszugsbild auf dem fotoempfindlichen Material entsprechend der ersten Wandlervorrichtung in den übrigen Bereichen entwickelt wird.

# FIG. 1

# FIG. 2

## (a)

## (b)

# FIG. 3

THRESHOLD
LEVEL

$e_1$

100% (DARK)

$g_3$

# FIG. 4

(a)

(b)

(c)

# FIG. 5

# FIG. 6

# FIG. 7

SIGNAL PROCESSING 76

COMPARATOR 80

# FIG. 8

SIGNAL PROCESSING MEMORY 117

GATE 118

COMPARATOR 122

# FIG. 9

# FIG. 10

# FIG. II
# PRIOR ART